# EUROPEAN PATENT SPECIFICATION

(11) **EP 0 691 243 B1**
(45) Date of publication and mention of the grant of the patent: **20.01.1999**
(21) Application number: 95110335.7
(22) Date of filing: 03.07.1995
(51) Int. Cl.: B60Q 7/00, B60Q 1/00

(54) **A triangle for the road indication of a stationary vehicle**
Warndreieck zum Anzeigen eines haltenden Fahrzeugs
Triangle pour indiquer la présence d'un véhicule arrêté sur la route

(30) Priority: 08.07.1994 IT MI941427
(43) Date of publication of application: 10.01.1996
(73) Proprietor: Calcagno, Domenico, 20048 Carate Brianza (Milano) (IT)
(72) Inventor: Calcagno, Domenico, 20048 Carate Brianza (Milano) (IT)
(74) Representative: Petruzzelli, Antonio European Patent Attorney

(56) References cited:
- EP-A- 0 342 449
- FR-A- 2 296 355
- FR-A- 2 297 284

## Description

The present invention relates to a road indication triangle for warning of the presence of a stationary motor vehicle on the roadway.

The indication triangle is of the type comprising an actual warning triangle comprising in turn a lower horizontal bar defining the horizontal side of the triangle whereto the other two bars are articulated at the opposite ends respectively to define the other sides of the triangle.

The latter two bars can be connected one to the other, when the triangle has to be used, at their ends not articulated to the horizontal bar, and are disengaged one from the other and arranged to the side of the horizontal bar when the triangle is folded to be returned into the appropriate case.

The indication triangle also comprises a support pedestal having a first and a second support arm, each comprising a horizontal cross member and side support uprights. The cross members of said first and second arm are connected one to the other by means of a central and vertical articulation pin to define a base which, in a working condition, has the two arms oriented perpendicular one to the other and in a non-use condition has the two arms arranged parallel one to the other.

Traditional triangles of the type referred above, when they are not used and are folded to be returned into the special case, maintain the triangle rigidly fixed to the support pedestal, the latter having foot portions which extend from the side opposite to that of attachment of the triangle and therefore provide an assembly whose height extends excessively. Holder cases of considerable size must therefore be provided for them. Said triangles and the related cases therefore constitute an accessory which occupies excessive volume inside the boots of motor vehicles.

Moreover, the triangle in itself having a relatively low cost, the costs of storage and transport from production locations to car manufacture plants in order to accessorise the motor vehicles produced there or in places of direct sale to the public, such as department stores, garages and others, have a certain effect on the final cost of the product. The need is therefore felt to reduce to a maximum the bulk of the single packaged unit of this triangle in order to restrict the costs of storage and transport of the indication triangle.

The object of the present invention is that of providing an indication triangle of the type referred above which in a folded, non-use condition occupies a considerably smaller volume compared to triangles produced according to the prior art.

Another object of the present invention is that of providing a road indication triangle which, in addition to achieving the previous object, has a simple configuration and low production cost.

The previous objects are achieved with a triangle for indicating a stationary motor vehicle, comprising a warning triangle having a lower horizontal bar at whose opposite ends the other two bars of the triangle are articulated respectively and which can be connected one to the other at their respective and opposite free ends, a support pedestal having a first and second support arm each comprising a horizontal cross member and side support uprights, whose cross members are connected one to the other by means of a central and vertical articulation pin, with the cross member of said second arm arranged below the cross member of said first support arm and the side uprights of the second arm arranged inside the side uprights of said first arm, of the type wherein the lower horizontal bar of the warning triangle is connected to said horizontal cross member of the pedestal; characterised in that means are provided for the hinged connection of said lower horizontal bar of the warning triangle to said cross member of said first arm of the pedestal to allow the triangle to be turned over below the cross members, between the side uprights of the arms of the pedestal.

In this way it is possible, when the triangle is not used and has to be returned inside the related holder case, to place the folded triangle in an overturned condition between the uprights of the pedestal, occupying this space which was not however occupied by traditional triangles.

The dependent claims refer to particular and advantageous embodiments of the invention.

The features and advantages of the present invention will in any case be made clearer on reading the following description relating to preferred embodiments of the invention.

The following description must be read with reference to the accompanying drawings, in which:
Figure 1 is a perspective view of the first preferred embodiment of the triangle of the present invention;
Figure 2 is a front view of the first embodiment with the triangle in a folded condition;
Figure 3 is a front view similar to that of Figure 2 of the preferred embodiment of the present invention, with the triangle in a folded condition and overturned below the cross members of the pedestal, between the uprights of the latter;
Figure 4 is a sectioned view taken along line 4-4 of Figure 2;
Figure 5 is an enlarged front view of a detail relating to the present embodiment of the hinge attachment of the triangle of the invention;
Figure 6 is a front view of only the triangle of the preferred embodiment of the present invention;
Figure 7 is a sectioned view taken along line 7-7 of Figure 2 relating to only the triangle in a folded condition;
Figure 8 is a front view of only the triangle in an intermediate phase of folding;
Figure 9 comprises views from above showing the bars of the triangle adjacent one to the other according to the reciprocal assembly diagram.

For convenience of description equal or equivalent elements are denoted in the figures by the same reference numeral.

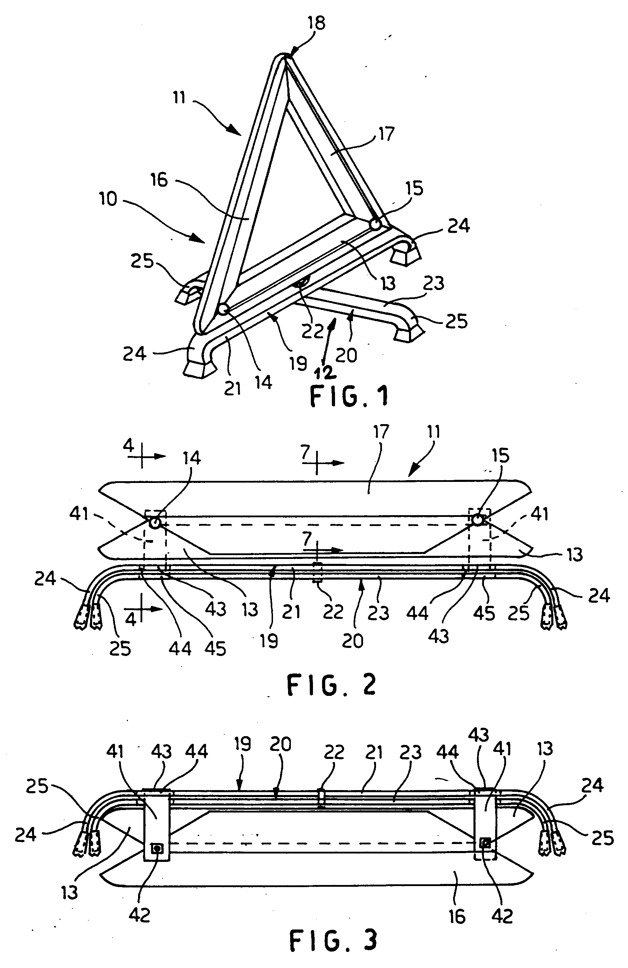

Figure 1 shows a preferred embodiment of a triangle for indicating a stationary motor vehicle according to the present invention.

The indication triangle, denoted overall by reference numeral 10, comprises an actual warning triangle 11 and a pedestal 12 for supporting the triangle 11.

The actual warning triangle 11 comprises the traditional bars or sides of the triangle articulated one to the other and angularly oriented one in relation to the others through an angle of 60°. The triangle specifically comprises a lower horizontal bar 13 at whose opposite ends the other two bars of the triangle 16 and 17 are articulated by means of respective pins 14 and 15. The latter two bars can in turn be connected one to the other at their respective and opposite free ends by means of a hooking system with tabs 18 of a wholly known type which is not therefore detailed here.

The support pedestal 12 comprises a first and a second support arm 19, 20 respectively, each having respective cross members 21, 23 wherefrom corresponding side uprights 24, 24 and 25, 25 extend downwards.

The two arms 19 and 20 of the pedestal are connected rotatably one to the other by means of a central and vertical articulation pin 22 which connects the cross member 21 of the first arm 19 to the underlying cross member 23 of the second arm 20, in such a way that, as shown in Figure 1, in a working condition, the second arm 20 can be positioned perpendicular to the first arm 19 to provide an advantageous supporting base for the triangle.

As shown in the subsequent figures, in a condition of non-use, to allow insertion of the triangle inside the case provided, the second arm 20 is arranged parallel to the first arm 19 with the side uprights 25, 25 of the second arm arranged inside the side uprights 24, 24 of said first arm.

The main feature of the present invention is shown in Figures 2 to 5. From these figures it can be seen how the triangle, and namely the lower horizontal bar thereof, is connected to the cross member of said first arm of the pedestal by suitable means which allow, when the triangle is not used and has been folded to be returned into the appropriate case, the triangle itself to turn over into a position below said cross members, so that it is arranged between the side uprights of the pedestal.

Figure 2 shows in particular the triangle 11 in the folded condition with its side bars which have been placed alongside the horizontal bar for attachment to the pedestal. In particular the view shows the bar 17 while the horizontal attachment bar 13 appears partially.

As is clear from Figure 3, which shows the triangle in an overturned condition, the triangle 11 in a folded condition has a maximum length which is smaller than the distance between the inner edges of the uprights of said second arm of the pedestal and can thus be inserted between the uprights themselves of the pedestal. Of the bars of the triangle 11 the view shows here the bar 16 while, as for the previous figure, the attachment bar 13 can only be seen partially.

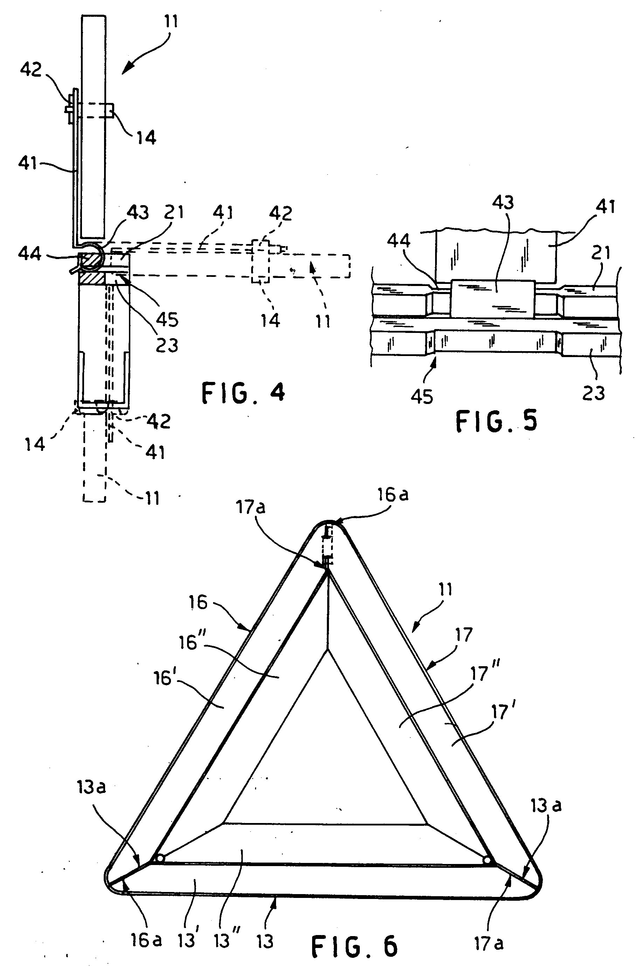

The overturning rotation, as also indicated in Figure 4 in which the final overturned position of the folded triangle and an intermediate passage position are shown by a dotted line, takes place around an axis parallel to the cross member of the first arm of the pedestal.

The present innovative concept can obviously also be applied to pedestals having a different number of support arms from the two shown, for example having one single support arm or a number of support arms higher than the two shown and wherein the support arms have been restrained one to the other in any suitable manner, different from that shown in relation to the preferred embodiment wherein the two support arms are restrained by means of the pin 22.

According to a preferred embodiment, the connection between the lower bar of the triangle and the cross member of said first arm is carried out by means of a first and a second plate 41, 41 attached disengageably to said lower horizontal bar of the triangle by means of respective screws 42, 42. Said screws 42, 42 extend in said articulation pins 14, 15.

As is particularly indicated also in Figures 4 and 5, the plates are hinged to the cross member of said first arm by means of annular elements 43, 43 which extend from the respective plates and wind to rotate in contact with articulation pins or pivots 44, 44 of said cross member 21.

Said pins 44, 44 in this preferred embodiment are formed by narrowings of the body of the cross member 21 of the first arm 19 of the pedestal.

Moreover, in order to enable easy overturning of the triangle in the folded condition, the front part of the cross member 23 of the underlying second arm 20 of the pedestal, at the two articulation hinges, has two cut-off portions 45, 45 with a width slightly greater than the width of said support plates 41, 41 to allow, when the triangle is turned over, with the insertion of said plates in said cut- off portions, the triangle itself to perform an overturning rotation through 180°.

It must clearly be understood that other systems suitable for the hinged connection of said triangle to said pedestal to allow overturning of the triangle below the pedestal itself can also be used for the present invention.

As is clear from the figures, each bar of the triangle has a longitudinal profile wherein the longitudinal ends have been provided tilted and converging towards the interior of the triangle, so as to define transverse faces 13a, 13a, 16a, 16a, and 17a, 17a respectively, each of which, in the extended use condition of the triangle, rests against the opposite face of the bar of the triangle adjacent thereto, as shown in Figure 6. In this way the bars of said triangle in the extended condition of use of the triangle can be arranged perfectly coplanar one with the other.

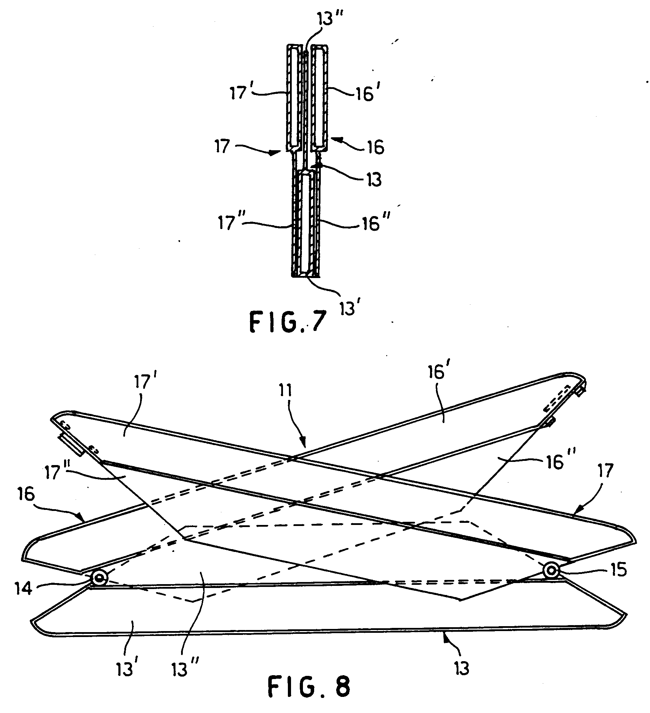

As shown in Figure 7, each bar of the triangle has a section comprising a widened rectangular portion 13', 16', 17' respectively, having the long sides of the rectangle arranged vertically, wherefrom a narrower rectangular portion, 13'', 16'', 17'' respectively, extends.

The lower horizontal bar is provided with the narrow portion 13'' turned upwards while the other two bars of the triangle are provided so that, in the folded condition shown in Figure 7, the respective narrow portions 16'', 17'' are turned downwards.

As shown in Figure 7, the articulated side bars 16, 17 of the triangle, in a folded condition, are arranged on the two opposite sides of said horizontal bar 13, in such a way as to position the respective narrow portion 16'', 17'' alongside the widened portion 13' of said horizontal bar 13.

Figure 8 illustrates an intermediate phase of the operation of folding of the triangle. It is clear from this figure that the bar 17, rotating on the pin 15, positions in front of the horizontal bar 13 while the bar 16, rotating on the pin 14, positions behind the horizontal bar 13.

According to a further advantageous feature of the present invention, in order to allow easy folding of the side bars 16, 17 of the triangle, that is to say to allow these bars 16, 17, starting from the extended condition, wherein they are coplanar one with the other and with the horizontal bar 13, to rotate without obstruction in order to arrange the respective narrow portions 17'' and 16'' respectively in front of and behind the widened portions 13' of the horizontal bar 13, and with the additional purpose of providing a triangle which with the bars in a folded condition has an extension with small width which remains substantially constant throughout the longitudinal extension of the bars, the bars of the triangle have been provided with an innovative configuration wherein the narrow vertical portions 13'', 16'' and 17'' of the bars do not maintain the same relative transverse position along the bar in relation to the respective widened portions, on the contrary, this transverse position is made to vary linearly along the respective bar.

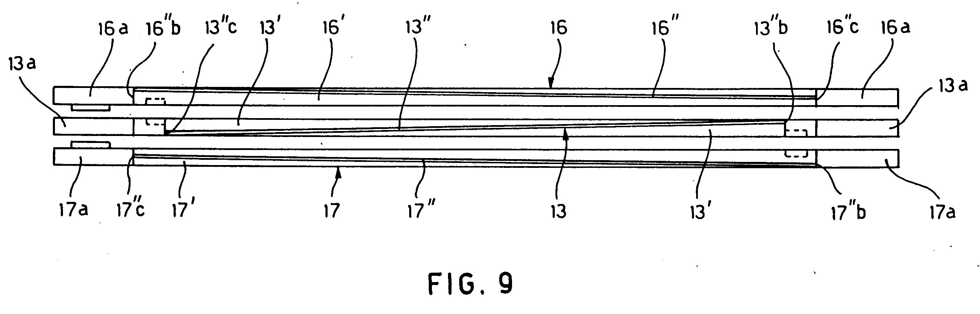

This fact is indicated in Figure 9 where for convenience of description all the bars are shown as seen from above and distanced one from the other. In actual fact said bars in an assembled and folded condition should be close one to the other with the side bars of the triangle adjacent and above the horizontal bar of the triangle itself as shown in Figure 7.

In Figure 9 it can be seen that the narrow portion 13'' of the orizzontal bar 13, at each point of articulation of the side bars of the triangle, extends vertically from the widened portion 13', positioning its longitudinal ends 13''b, 13''c at the external face of the widened portion 13' which is opposite the respective lateral bar 16 or 17 connected thereto. That is to say the longitudinal end 13''b of the narrow portion 13'' is positioned at the lateral side face of the widened portion 13' opposite to the side bar 17 and the longitudinal end 13''c of the narrow portion 13'' is positioned at the lateral side face of the widened portion 13' opposite to the side bar 16. The narrow portion 13'' of the horizontal bar 13 of the triangle extends longitudinally crosswise in relation to the widened portion 13'.

Contrarily, for the lateral bars 16, 17 of the triangle, the respective narrow portions 16'' and 17'', at the rotatable connection to said horizontal bar 13, extend vertically from the respective widened portion 16', 17', positioning their longitudinal ends 16''b and 17''b at the lateral face of the respective widened portion 16', 17' turned towards the exterior of the triangle, and the other longitudinal ends 16''c, 17''c situated at the mutual attachement parts of the lateral bars 16, 17 are positioned at the centre of the respective widened portion 16', 17'.

It must naturally be understood that what has been written and shown with reference to the preferred embodiment of the present invention has been given purely by way of a non-limiting example of the principle claimed.

## Claims

1. A triangle for indicating a stationary motor vehicle, comprising a warning triangle (11) having a lower horizontal bar (13) at whose opposite ends the other two bars (16, 17) of the triangle are articulated respectively and which can be connected one to the other at their respective and opposite free ends, a support pedestal (12) having a first (19) and a second (20) support arm, each comprising a respective horizontal cross member (21, 23) and side support uprights (24, 24; 25, 25) whose cross members (21, 23) are connected one to the other by means of a central and vertical articulation pin (22), with the cross member (23) of said second arm (20) arranged below the cross member (21) of said first support arm (19) and the side uprights (25, 25) of the second arm (20) arranged inside the side uprights (24, 24) of said first arm (19); of the type wherein the lower horizontal bar (13) of the warning triangle (11) is connected to said horizontal cross member (21) of the pedestal (12); characterised in that means are provided for the hinged connection of said lower horizontal bar (13) of the warning triangle to said cross member (21) of said first arm (19) of the pedestal (12) to allow the triangle to be turned over below the cross members (23), between the side uprights (24, 25) of the arms of the pedestal (12).

2. A triangle for indicating a stationary motor vehicle according to claim 1, characterised in that said means of hinged connection comprise, on said cross member (21) of said first arm (19) a first and a second pin (44, 44) defining pivots for corresponding first and second elements (43, 43) with rings rotating thereon and connected with said horizontal bar (13) of the triangle (11).

3. A triangle for indicating a stationary motor vehicle according to claim 2, characterised in that said pins (44, 44) consist of longitudinal narrowings of the body of the cross member (21) of said first arm.

4. A triangle for indicating a stationary motor vehicle according to claim 2, characterised in that said hinging ring elements (43, 43) are integral with a respective plate (41, 41)fixed to said lower horizontal bar (13) of the triangle (11) in a disengageable manner.

5. A triangle for indicating a stationary motor vehicle according to claim 1, characterised in that each bar of the triangle (11) has end face (13a, 13a; 16a, 16a; 17a, 17a) which are tilted and converge towards the interior of the triangle to define, in the extended condition of use of the triangle, abutting faces for resting against the opposite face of the adjacent bar of the triangle so that a triangle is provided in which in the extended condition of use has all three bars arranged coplanarly.

6. A triangle for indicating a stationary motor vehicle according to claim 1, wherein each bar of the triangle (11) has a section comprising a widened vertical portion (13', 16', 17',) wherefrom a narrow portion (13'', 16'', 17'') extends vertically, characterised in that each of said bar of the triangle (11) has the respective narrow portion (13'', 16'', 17'') which extends longitudinally, arranging itself crosswise in relation to the corresponding widened portion (13', 16', 17').

7. A triangle for indicating a stationary motor vehicle according to claim 6, wherein the horizontal bar (13) is provided with the narrow portion (13'') arranged above the widened portion (13'), while the other two bars (16, 17) in a folded condition are arranged on the two opposite sides of the horizontal bar (13) and both have the respective narrow portion (16'', 17'') arranged below the respective widened portion (16', 17'), so as to position their respective narrow portions (16'', 17'') at the opposite sides of the widened portion (13') of said horizontal bar (13) of the triangle (11); characterised in that the narrow portion (13'') of the horizontal bar (13) of the triangle (11), at each point of articulation of the side bars (16, 17) of the triangle (11), extends vertically from said widened vertical portion, positioning its longitudinal ends (13''b, 13''c) respectively at the respective opposite external face of the widened portion, in which each of said ends (13''b, 13''c) is placed on the opposite side of the respective side bar (16, 17) connected thereto; whereas for each of the side bars (16, 17) of the triangle (11) the respective narrow portions (16'', 17''), at the rotatable connection to said horizontal bar (13), extend vertically, positioning the corresponding longitudinal ends (16''b, 17''b) at the external face of the respective widened portions (16', 17'), the other longitudinal ends (16''c, 17''c) of said bars (16, 17) of the triangle (11) being positioned at the centre of the respective widened portion (16', 17').

## Patentansprüche

1. Warndreieck zum Anzeigen eines haltenden Fahrzeugs, das ein Warndreieck (11) umfaßt, das aus einer unteren horizontalen Stange (13) besteht, an deren gegenüberliegenden Enden die anderen beiden Stangen (16, 17) des Dreiecks jeweils angelenkt sind und die an ihren jeweiligen, gegenüberliegenden freien Enden miteinander verbunden werden können, ein Untergestell (12), das einen ersten (19) und einen zweiten (20) Tragarm aufweist, die jeweils ein entsprechendes horizontales Querglied (21, 23) und seitliche Halteträger (24, 24, 25, 25) umfassen, deren Querglieder (21, 23) miteinander durch einen mittleren und senkrechten Gelenkzapfen (22) verbunden sind, wobei das Querglied (23) des besagten zweiten Arms (20) unterhalb des Querglieds (21) des besagten ersten Tragarms (19) angeordnet ist, und die besagten Seitenträger (25, 25) des besagten zweiten Arms (20) in den besagten Trägern (24, 24) des besagten ersten Arms angeordnet sind; des Typs, bei dem die untere horizontale Stange (13) des Warndreiecks (11) mit dem besagten horizontalen Querglied (21) des Untergestells (12) verbunden ist; dadurch gekennzeichnet, daß Elemente für die Scharnierverbindung der besagten horizontalen Stange (13) des Warndreiecks mit dem besagten Querglied (21) des besagten ersten Arms (19) des Untergestells (12) vorgesehen sind, damit das Dreieck unter den Quergliedern (23) zwischen den Seitenträgern (24, 25) der Arme des Untergestells (12) umgedreht werden kann.

2. Ein Warndreieck zum Anzeigen eines haltenden Fahrzeugs gemäß Anspruch 1, dadurch gekennzeichnet, daß die besagten Scharnier-Verbindungselemente an dem besagten Querglied (21) des besagten ersten Arms (19) einen ersten und einen zweiten Zapfen (44, 44) umfassen, die Drehpunkte bilden, die das erste und zweite Element (43, 43) mit Ringen übereinstimmen lassen, die sich darauf drehen und mit der besagten horizontalen Stange (13) des Dreiecks (11) verbunden sind.

3. Ein Warndreieck zum Anzeigen eines haltenden Fahrzeugs gemäß Anspruch 2, dadurch gekennzeichnet, daß die besagten Zapfen (44, 44) aus länglichen Verengungen des Körpers des Querglieds (21) des besagten ersten Arms bestehen.

4. Ein Warndreieck zum Anzeigen eines haltenden Fahrzeugs gemäß Anspruch 2, dadurch gekennzeichnet, daß die besagten Scharnier-Ringelemente (43, 43) fest an einer entsprechenden Platte (41, 41) angebaut sind, die an der besagten unteren horizontalen Stange (13) des Dreiecks (11) befestigt ist, und zwar in ausrückbarer Weise.

5. Ein Warndreieck zum Anzeigen eines haltenden Fahrzeugs gemäß Anspruch 1, dadurch gekennzeichnet, daß jede Stange des Dreiecks (11) Endseiten aufweist (13a, 13a, 16a, 16a, 17a, 17a), die geneigt sind und in Richtung des unteren Teils des zu bildenden Dreiecks konvergieren, und zwar im ausgezogenen Gebrauchszustand des Dreiecks, sowie angrenzende Seiten, die an der gegenüberliegenden Seite der anliegenden Stange des Dreiecks aufliegen, so daß ein Dreieck entsteht, bei dem im ausgezogenen Gebrauchszustand alle drei Stangen koplanar angeordnet sind.

6. Ein Warndreieck zum Anzeigen eines haltenden Fahrzeugs gemäß Anspruch 1, wobei jede Stange des Dreiecks (11) einen Bereich aufweist, der einen erweiterten senkrechten Abschnitt (13', 16', 17') aufweist, von dem aus sich ein enger Abschnitt (13'', 16'', 17''), senkrecht erstreckt, dadurch gekennzeichnet, daß jede der besagten Stangen des Dreiecks (11) einen entsprechenden engen Abschnitt (13'', 16'', 17'') aufweist, der sich längs erstreckt und sich quer in Bezug aufden entsprechenden erweiterten Teil (13'', 16'', 17'') anordnet.

7. Ein Warndreieck zum Anzeigen eines haltenden Fahrzeugs gemäß Anspruch 6, wobei der enge Abschnitt (13'') der horizontalen Stange (13) oberhalb des erweiterten Abschnitts (13') angeordnet ist während die übrigen beiden Stangen (16, 17) in zusammengeklapptem Zustand an den beiden gegenüberliegenden Seiten der horizontalen Stange (13) angeordnet sind der entsprechende enge Abschnitt (16'', 17'') der beiden unter dem entsprechenden erweiterten Abschnitt (16'', 17'') angeordnet, so daß ihre jeweiligen engen Abschnitte (16'', 17'') an den gegenüberliegenden Seiten des erweiterten Abschnitts (13'') der besagten horizontalen Stange (13) des Dreiecks (11) zu liegen kommen; dadurch gekennzeichnet, daß der enge Abschnitt (13'') der horizontalen Stange (13) des Dreiecks (11) sich an jedem Gelenk der Seitenstangen (16, 17) des Dreiecks (11) senkrecht vom besagten erweiterten Abschnitt erstreckt, wobei seine Längsenden (13''b, 13''c) jeweils an der entsprechenden gegenüberliegenden Seite des erweiterten Abschnitts zu liegen kommen und jedes der besagten Enden (13''b, 13''c) an der gegenüberliegenden Seite der entsprechenden, damit verbundenen Seitenstange (16, 17) angeordnet ist; während sich die entsprechenden engen Abschnitte (16'', 17'') für jede der Seitenstangen (16, 17) des Dreiecks (11) an den drehbaren Verbindungen mit der besagten horizontalen Stange (13) senkrecht erstrecken, die entsprechenden Längsenden (16''b, 17''b) an der äußeren Seite der jeweiligen erweiterten Abschnitte (16', 17') angeordnet werden und die anderen Längsenden (16''c, 17''c) der besagten Stangen (16, 17) des Dreiecks (11) in der Mitte des jeweiligen erweiterten Abschnitts (16', 17') zu liegen kommen.

## Revendications

1. Triangle pour indiquer la présence d'un véhicule arrêté sur la route, comprenant un triangle de signalisation (11) ayant une barre horizontale inférieure (13) aux extrémités opposées de laquelle sont articulées respectivement les deux autres barres (16, 17) du triangle et qui peuvent être reliées l'une à l'autre à leurs extrémités libres respectives et opposées, un socle de support (12) ayant un premier (19) et un second (20) bras de support, comprenant chacun un membre transversal horizontal respectif (21, 23) et des montants de support latéraux (24, 24; 25, 25) dont les membres transversaux (21, 23) sont assemblés l'un à l'autre au moyen d'un goujon d'articulation (22) central et vertical, le membre transversal (23) dudit second bras (20) étant disposé sous le membre transversal (21) dudit premier bras de support (19) et les montants latéraux (25, 25) du second bras (20) étant disposés à l'intérieur des montants latéraux (24, 24) dudit premier bras (19); du type où la barre horizontale inférieure (13) du triangle de signalisation (11) est reliée audit membre transversal horizontal (21) du socle (12); caractérisé par le fait qu'il est doté de moyens d'assemblage à charnières de ladite barre horizontale inférieure (13) du triangle de signalisation audit membre transversal (21) dudit premier bras (19) du socle (12) pour permettre au triangle d'être retourné sous les membres transversaux (23) entre les montants latéraux (24, 25) des bras du socle (12).

2. Triangle pour indiquer la présence d'un véhicule arrêté sur la route conformément à la revendication 1, caractérisé par le fait que lesdits moyens d'assemblage à charnières comprennent, sur ledit membre transversal (21) dudit premier bras (19) un premier et un second goujons (44, 44) déterminant des pivots pour le premier et le second éléments respectifs (43, 43) avec des bagues pivotant sur les pivots et assemblée à ladite barre horizontale (13) du triangle (11).

3. Triangle pour indiquer la présence d'un véhicule arrêté sur la route conformément à la revendication 2, caractérisé par le fait que lesdits goujons (44, 44) consistent en des rétrécissements longitudinaux du corps du membre transversal (21) dudit premier bras.

4. Triangle pour indiquer la présence d'un véhicule arrêté sur la route conformément à la revendication 2, caractérisé par le fait que lesdits éléments annulaires à charnière (43, 43) font partie intégrante d'une plaque respective (41, 41) fixée à ladite barre horizontale inférieure (13) du triangle (11) de manière à pouvoir être dégagée.

5. Triangle pour indiquer la présence d'un véhicule arrêté sur la route conformément à la revendication 1, caractérisé par le fait que chaque barre du triangle (11) présente les faces terminales (13a, 13a; 16a, 16a; 17a, 17a) inclinées et convergeant vers l'intérieur du triangle pour déterminer, dans la condition d'emploi étendue, des faces aboutées pour s'appuyer conte la face opposée de la barre adjacente du triangle de manière à obtenir un triangle où dans la condition d'emploi étendue les trois barres sont toutes disposées d'une manière coplanaire.

6. Triangle pour indiquer la présence d'un véhicule arrêté sur la route conformément à la revendication 1, où chaque barre du triangle 11 a une section comprenant une portion verticale élargie (13', 16', 17') d'où s'étend verticalement une portion étroite (13'', 16'', 17''), caractérisé par le fait que chacune desdites barres du triangle (11) a sa portion étroite respective (13'', 16'', 17'') qui s'étend longitudinalement, en se disposant transversalement par rapport à la portion élargie correspondante (13', 16', 17').

7. Triangle pour indiquer la présence d'un véhicule arrêté sur la route conformément à la revendication 6, dans lequel la barre horizontale (13) est fournie avec la portion étroite (13'') disposée au-dessus de la portion élargie (13') alors que les deux autres barres (16, 17) en condition repliée, sont disposées des deux côtés opposés de la barre horizontale (13) et les deux ont leur respective portion étroite (16'', 17'') disposée sous leur respective portion élargie (16', 17') de manière à positionner leurs respectives portions étroites (16'', 17'') sur les côtés opposés de la portion élargie (13') de ladite barre horizontale (13) du triangle (11); caractérisée par le fait que la portion étroite (13'') de la barre horizontale (13) du triangle (11), dans chaque point d'articulation des barres latérales (16, 17) du triangle (11), s'étend verticalement à partir de ladite position verticale élargie, en positionnant ses extrémités longitudinales (13''b, 13''c) respectivement à leurs respectives faces extérieures opposées de la portion élargie, où chacune desdites extrémités (13''b, 13''c) est placée sur le côté opposé de la barre latérale respective (16, 17) qui lui est reliée; où pour chacune des barres latérales (16, 17) du triangle (11) les portions étroites respectives (16'', 17'') ; à la connexion pivotante à ladite barre horizontale (13), s'étendent verticalement en positionnant les extrémités longitudinales correspondantes (16''b, 17''b) sur la face extérieure des portions élargies respectives (16', 17'), les autres extrémités longitudinales (16''c, 17''c) desdites barres (16, 17) du triangle (11) étant placées au milieu des portions élargies respectives (16', 17').
